# EUROPÄISCHE PATENTSCHRIFT

(11) **EP 2 853 852 B1**
(45) Veröffentlichungstag und Bekanntmachung des Hinweises auf die Patenterteilung: **15.02.2017**
(21) Anmeldenummer: 13196015.5
(22) Anmeldetag: 06.12.2013
(51) Int. Cl.: F28F 25/08

(54) **Einbauelement für eine Vorrichtung zur Behandlung eines Nutzfluids mittels eines Arbeitsfluids**
Installation element for a device for treating a usage fluid by means of a working fluid
Elément d'intégration pour un dispositif de traitement d'un fluide utile au moyen d'un fluide de travail

(30) Priorität: 26.09.2013 DE 202013008580 U
(43) Veröffentlichungstag der Anmeldung: 01.04.2015
(73) Patentinhaber: Hewitech GmbH & Co. KG, 48607 Ochtrup (DE)
(72) Erfinder: Hewing, Bernd, 48607 Ochtrup (DE); Dirkskötter, Frank, 48607 Ochtrup (DE)
(74) Vertreter: dompatent von Kreisler Selting Werner - Partnerschaft von Patent- und Rechtsanwälten mbB

(56) Entgegenhaltungen:
- EP-A2- 1 152 205
- DE-A1- 19 733 480
- DE-A1- 19 819 945
- DE-A1-102005 051 882
- FR-A1- 2 766 264

## Beschreibung

Die Erfindung betrifft ein Einbauelement für eine Vorrichtung zur Behandlung, insbesondere Befeuchtung, Reinigung und/oder Kühlung eines Nutzfluids, insbesondere eines Gases wie z.B. Luft, mittels eines Arbeitsfluids, insbesondere einer Flüssigkeit wie z.B. Wasser, und vorzugsweise für eine nach dem Kreuzstromprinzip betriebene Gasbehandlungsvorrichtung, insbesondere in Form eines Wärmetauschers als z.B. Rieselkühler für einen Kühlturm. Insbesondere betrifft die Vorrichtung ein Einbauelement für eine der zuvor genannten Vorrichtungen in Form eines Tropfkörperelements. Ferner betrifft die Erfindung auch die Verwendung des zuvor genannten Einbau- bzw. Tropfkörperelements.

Vorrichtungen zur Behandlung von Gasen, insbesondere zur Befeuchtung, Reinigung und/oder Kühlung von Gasen wie bspw. Luft sind grundsätzlich bekannt. Derartige Vorrichtungen können bspw. als Verdunstungsbefeuchter oder Stoffaustauscher dienen, die unter anderem zur Luftbefeuchtung und gleichzeitigen Luftkühlung bspw. in Wohn- und Bürogebäuden, Lagerhallen, Stallungen, Gewächshäusern und anderen Räumen oder auch von technischen Anlagen, bspw. für die Reinigung und insbesondere Entstaubung von Zu- oder Abluft für reaktive Gas-Luftreinigungen (insbesondere Entfernung von Geruchsstoffen wie bspw. Ammoniak aus der Stallabluft) eingesetzt werden. Die Abkühlung eines Gases mit Hilfe derartiger Vorrichtungen erfolgt nach dem Prinzip der adiabatischen Kühlung (Verdunstungskühlung). Behandlungsvorrichtungen dienen aber insbesondere auch als Wärmeaustauscher bspw. zum Einbau in bzw. an Kühltürmen und sind in der Ausgestaltung von Rieselkühlern grundsätzlich bekannt.

Die bekannten Behandlungsvorrichtungen der vorstehend genannten Arten weisen Einbaueinrichtungen in Form von Einbaupaketen auf, die jeweils eine Vielzahl von Mattenelementen ausweisen, welche zumindest gewellt sind, so dass bei dichter Anlage benachbarter Mattenelemente sich kreuzende oder seitlich versetzte Kanäle entstehen, durch die über eine Eingangsseite der Vorrichtung das Gas einströmt, die Vorrichtung durchströmt und an einer gegenüberliegenden Ausgangsseite wieder herausströmt. Die Eingangs- und Ausgangsseiten der Vorrichtung werden durch gegenüberliegende Ränder einzelner nebeneinanderliegender Mattenelemente der eingangs- bzw. ausgangsseitig der Vorrichtung angeordneten Einbaupakete gebildet. Somit strömt also das zu behandelnde Fluid parallel zur Erstreckung der Mattenelemente hindurch. Grundsätzlich ist es aber auch möglich, dass das zu behandelnde Fluid quer zur Erstreckung der Mattenelemente strömt.

Die Einbaupakete der vorstehend genannten Typen von Behandlungsvorrichtungen werden mit Flüssigkeit, dem sogenannten Arbeitsfluid, bei dem es sich insbesondere um Wasser handelt, benetzt, so dass das zu behandelnde Fluid an benetzten Flächen der Mattenelemente entlang strömt. Dabei ist es wünschenswert, dass die Benetzungsflüssigkeit eine möglichst große Oberfläche bildet und sich über einen längeren Zeitraum in der Vorrichtung bzw. den Einbaupaketen hält.

Im Regelfall sind die Mattenelemente rechteckförmig, wobei mehrere benachbarte Mattenelemente ein blockförmiges (quaderförmiges) Einbaupaket bilden. Es ist aber auch möglich, dass die Einbaupakete andere geometrische Formen ausweisen. So könnte man beispielsweise durch den Einsatz unterschiedlich großer, jeweils rechteckiger Mattenelemente ein Einbaupaket erhalten, das zylindrisch ist. Längs eines Durchmessers des Querschnitts des Zylinders sind dann die breitesten Mattenelemente angeordnet, wobei die jeweils benachbarten Mattenelemente in ihrer Breite abnehmen.

Die bekannten Behandlungsvorrichtungen können nach dem Gegenstrom- oder nach dem Kreuzstromprinzip arbeiten. Beim Gegenstromprinzip strömen das zu behandelnde Fluid und das zur Behandlung dieses Fluids eingesetzte Arbeitsfluid (bspw. Kühlmedium) entgegengesetzt zueinander. Bei Behandlungsvorrichtungen, die nach dem Kreuzstromprinzip arbeiten, kreuzen sich die Strömungsrichtungen des zu behandelnden Fluids und des Arbeitsfluids, und zwar im Regelfall unter einem im Wesentlichen rechten Winkel.

Tropfkörper- bzw. Rieselkühler werden insbesondere bei Kühltürmen von Kraftwerken eingesetzt. Dabei haben sich aufgrund ihres geringen Strömungswiderstandes für das zu kühlende Fluid Kühler bewährt, die nach dem Kreuzstromprinzip arbeiten. Beispiele für derartige Wärmetauscher zum Zwecke der Kühlung von bspw. Wasserdampf in Kraftwerken sind in US-A-3 751 017, FR-A-2 419 493, FR-A-2 766 264, FR-A-2 766 263 und FR-A-2 658 906 beschrieben. Dabei besteht der Kühler aus einer Vielzahl von in übereinander angeordneten Ebenen positionierten Gitterplatten (aus Kunststoff) als Rieselkörper, wobei der zu kühlende Wasserdampf zwischen den einzelnen Gitterplattenebenen strömt und das Kühlwasser als Sprühwasser auf die oberste Gitterplattenebene aufgesprüht wird und von Gitterplattenebene zu Gitterplattenebene heruntertropft. Die einzelnen Gitterplatten liegen dabei an ihren Ecken auf Auflagervorrichtungen auf, die wiederum an herabhängenden Vertikalstreben befestigt sind (siehe hierzu insbesondere US-A-3 751 017).

Andere Einbauelemente für Wärmetauscher sind in DE 10 2005 051 882 A1 und DE 197 33 480 A1 offenbart.

Aufgabe der Erfindung ist es, eine Auflagervorrichtung für die Tropfkörpereinbauten von Fluidbehandlungsvorrichtungen bzgl. ihrer Effektivität zu verbessern.

Zur Lösung dieser Aufgabe wird mit der Erfindung ein Einbauelement für eine Vorrichtung zur Behandlung, insbesondere Befeuchtung, Reinigung und/oder Kühlung eines Nutzfluids, insbesondere eines Gases wie z.B. Luft, mittels eines Arbeitsfluids, insbesondere einer Flüssigkeit wie z.B. Wasser, und vorzugsweise für eine nach dem Kreuzstromprinzip betriebene Gasbehandlungsvorrichtung, insbesondere in Form eines Wärmetauschers als z.B. Rieselkühler für einen Kühlturm vorgeschlagen, wobei das Einbauelement mindestens eine Gittermatte aufweist, die versehen ist mit
- einer Oberseite und einer Unterseite sowie zwei zueinander parallelen Längsrändern und zwei dazu querverlaufenden Querrändern,
- einer ersten Gruppe von oberen Gitterstreben, die in Höhe der Oberseite sowie parallel zu den Längsrändern verlaufen und sich von dem einen Querrand hin zum anderen Querrand erstrecken,
- einer zweiten Gruppe von unteren Gitterstreben, die in Höhe der Unterseite sowie parallel zu den Längsrändern verlaufen und sich zwischen den Querrändern erstrecken,
- in Höhe der Oberseite verlaufenden, oberseitigen Verbindungsstreben zwischen jeweils zwei benachbarten oberen Gitterstreben,
- in Höhe der Unterseite verlaufenden, unterseitigen Verbindungsstreben zwischen jeweils zwei benachbarten unteren Gitterstreben,
- wobei die oberseitigen und die unterseitigen Verbindungsstreben, in Erstreckung der Gittermatte zwischen ihren Längsrändern betrachtet, wechselweise aufeinanderfolgen, und
- von der Ober- bis zur Unterseite verlaufenden Zwischenverbindungsstreben zwischen jeweils einer oberen Gitterstrebe und der zu dieser nächstbenachbarten unteren Gitterstrebe,
- wobei die unteren Gitterstreben an ihren an mindestens einem der beiden Querrändern angeordneten Enden schräg oder gekrümmt zur Oberseite der Gittermatte hin weisende Auflaufabschnitte zur Erleichterung eines in Richtung der Gitterstrebenerstreckung erfolgenden Verschiebens der Gittermatte relativ zu einem Untergrund und über diesen aufweisen.

Das erfindungsgemäße Einbauelement (bzw. Tropfkörperelement) umfasst mindestens eine Gittermatte, wobei dann, wenn mehrere derartiger Gittermatten vorhanden sind, diese übereinander gestapelt werden, und zwar insbesondere indem die aufeinanderfolgenden, übereinander angeordneten Gittermatten wechselweise verdreht angeordnet sind.

Die mindestens eine Gittermatte besteht aus einer Vielzahl von Verstrebungen und weist eine Ober- sowie eine Unterseite auf. Längs ihres Umfangs ist die Gittermatte durch zwei im Wesentlichen parallele Längsränder sowie durch zwei dazu im Wesentlichen quer verlaufende, wiederum zueinander im Wesentlichen parallele Querränder begrenzt. Bei Betrachtung der Gittermatte in der Ebene, in der sich die Gittermatte erstreckt, und auch in Richtung auf einen ihrer Querränder weist die Gittermatte eine im Wesentlichen mäanderförmige Gestalt ähnlich der Linie eines Rechteckwechselsignals auf. Demzufolge umfasst die Gittermatte eine erste Gruppe von oberen Gitterstreben sowie eine zweite Gruppe von unteren Gitterstreben. Die oberen Gitterstreben verlaufen in etwa in Höhe der Oberseite sowie parallel zu den Längsrändern und erstrecken sich von Querrand zu Querrand. Dementsprechend verlaufen die unteren Gitterstreben im Wesentlichen in Höhe der Unterseite der Gittermatte sowie parallel zu den Längsrändern und erstrecken sich ebenfalls von Querrand zu Querrand. In Höhe der Oberseite verlaufen ferner oberseitige Verbindungsstreben, die im Wesentlichen parallel zu den Querrändern verlaufen und jeweils zwei benachbarte obere Gitterstreben verbinden. Ebenso verlaufen in Höhe der Unterseite unterseitige Verbindungsstreben, die jeweils zwei benachbarte untere Gitterstreben verbinden und ihrerseits untereinander parallel sowie im Wesentlichen parallel zu den Querrändern verlaufen. Zur Erzielung der in Seitenansicht betrachtet mäanderartigen Struktur der Gittermatte folgen die ober- und unterseitigen Verbindungsstreben in Erstreckung der Gittermatte zwischen ihren Längsrändern betrachtet wechselweise aufeinander. In der Draufsicht betrachtet jeweils benachbarte obere und untere Gitterstreben sind durch Zwischenverbindungsstreben untereinander verbunden, die demzufolge im Wesentlichen in Höhenerstreckung der Gittermatte verlaufen.

Erfindungsgemäß ist eine derartige Gittermatte des Einbauelements nach der Erfindung an zumindest einem ihrer beiden Querränder und vorzugsweise an beiden Querrändern mit Auflaufabschnitten nach Art von schräg von einem Untergrund nach oben verlaufenden Kufen versehen. Diese Auflaufabschnitte sind in Verlängerung der unteren Gitterstreben an mindestens einem der beiden Querränder ausgebildet und verlaufen von den an diesem Querrand befindlichen Enden der Gitterstreben schräg oder gekrümmt zur Oberseite der Gittermatte hin. Zwei derartige benachbarte Auflaufabschnitte der unteren Gitterstreben können durch einen Querrandstrebenabschnitt miteinander verbunden und damit versteift sein. Durch diese Auflaufabschnitte ist es möglich, die Gittermatte, die mit ihrer Unterseite auf einem Untergrund aufliegt, über diesen Untergrund zu verschieben, ohne dass es zu Verhakungen oder dergleichen kommt; die Auflaufabschnitte sorgen dafür, dass die Gittermatte auch über kleinere Hindernisse hinweg gleiten kann. Damit kann eine solche Gittermatte bzw. ein Gittermattenstapel, dessen untere Gittermatte mit ihrer Unterseite auf einem Untergrund aufliegt, bspw. zwischen die Tropfkörpereinbauten eines Kreuzströmers von außen eingeschoben werden.

Das erfindungsgemäße Einbauelement eignet sich also vorzugsweise zur Nachrüstung von bestehenden Gasbehandlungsvorrichtungen, die nach dem Kreuz- oder Gegenstromprinzip arbeiten. Insbesondere die oberseitigen und unterseitigen Verbindungsstreben sorgen, in der Projektion der Gittermatte bei Betrachtung von der Seite, für einzelne "Kanäle", deren Begrenzungswände durch die verschiedenen Gitterstreben gebildet werden, wodurch es zu einer Führung des zu behandelnden Nutzfluids kommt, während, beim Kreuzstromprinzip, das Arbeitsfluid quer dazu in Höhenerstreckung der Gittermatte strömt.

Zur Führung des Arbeitsfluidstroms oder Teilströmen davon ist es von Vorteil, wenn die jeweils längs eines Längsrandes verlaufenden oberen und unteren Gitterstreben an den gegenüberliegenden Seitenrändern von hochstehenden streifenförmigen Wandelementen angeordnet sind, die entweder geschlossen oder perforiert o.dgl. mit Durchbrechungen versehen sind. Die streifenförmigen Wandelemente können schließlich auch durch weitere Zwischenverbindungsstreben realisiert werden.

Um im Falle des Einsatzes des erfindungsgemäßen Einbauelements bei einer Kreuzstrom-Gasbehandlungsvorrichtung in Form eines Wärmetauschers für bspw. einen Kühlturm für eine noch weiter verbesserte Vereinzelung der Kühlwassertröpfchen zu sorgen, ist es von Vorteil, wenn die oberseitigen und/oder die unterseitigen Verbindungsstreben breiter sind als die Zwischenverbindungsstreben und ggf. als die oberen und die unteren Gitterstreben. Durch die breiten Verbindungsstreben an den Ober- und Unterseiten der Gittermatten kommt es zu einem Vereinzeln der Wassertröpfchen, die von oben auf die Gittermatten auftreffen.

In weiterer vorteilhafter Ausgestaltung der Erfindung kann vorgesehen sein, dass die Längsränder durchgehend und die Querränder der Gittermatten unterbrochen sind, wobei mit weiterem Vorteil und unabhängig von dem zuvor genannten Merkmal vorgesehen sein kann, dass die oberseitigen Verbindungsstreben an zur Unterseite der Gittermatte weisende Unterseiten der oberen Gitterstreben mit diesen verbunden sind und/oder dass die unterseitigen Verbindungsstreben an zur Oberseite der Gittermatte weisenden Oberseiten der unteren Gitterstreben mit diesen verbunden sind.

Die Strebenabschnitte, die die Auflaufabschnitte paarweise untereinander verbinden, verlaufen zweckmäßigerweise in einer Höhe (bezogen auf die Höhenerstreckung der Gittermatte), die sich innerhalb des mittleren Drittels des Abstandes zwischen der Ober- und der Unterseite der Gittermatte (von der Unterseite der Gittermatte aus betrachtet) befindet. Diese Querrandstrebenabschnitte bilden bei Betrachtung der Gittermatte eine Barriere, die für eine Verwirbelung des die Gittermatte in deren Ebenenerstreckung druchströmenden Arbeitsfluids sorgt, und bilden in Ebenenerstreckung der Gittermatte Kanäle, die aufgrund der Gitterstruktur zu deren Seiten offen sind und somit ebenfalls für Verwirbelungen von Arbeits- und Nutzfluid sorgen. Derartige Verwirbelungen entstehen auch an den einzelnen Gitterstreben der Gittermatte, was wiederum dem Austausch zwischen Arbeits- und Nutzfluid dienlich ist.

In weiterer vorteilhafter Ausgestaltung der Erfindung kann vorgesehen sein, dass jeder Querrand der Gittermatte mindestens eine Durchgangsöffnung mit einer zur Ober- und Unterseite der Gittermatte parallelen Öffnungsebene aufweist, wobei die Durchgangsöffnung in Flucht mit einer an einem Querrand einer oberhalb oder unterhalb der besagten Gittermatte benachbarten Gittermatte angeordneten Durchgangsöffnung positionierbar ist, und dass die beiden Gittermatten mittels eines Kopplungselements zum Einstecken in die miteinander fluchtenden Durchgangsöffnungen verbindbar sind, wobei das Kopplungselement insbesondere als Hohl- oder Vollmaterialstab ausgebildet ist. Dabei kann mit weiterem Vorteil vorgesehen sein, dass die mindestens eine Durchgangsöffnung an oder in einem der Querrandstrebenabschnitte ausgebildet ist.

Durch die zuvor genannte Ausgestaltung des Einbauelements ist es möglich, verschiedene Gittermattenpakete benachbart zueinander anzuordnen und untereinander zu verbinden. Die Verbindung benachbarter Gittermattenpakete kann schrittweise, also für jeweils benachbarte Gittermatten einzeln erfolgen, nachdem das jeweils letzte Gittermattenpaket in den Zwischenraum zwischen die Tropfkörper eines Kreuzströmers oder Gegenströmers eingebracht worden ist, oder aber eine Vielzahl von Gittermattenpaketen kann außerhalb des Kreuzströmers oder Gegenströmers im Vorhinein untereinander verbunden sein, so dass dann diese Aneinanderreihung von Gittermattenpaketen anschließend als gemeinsame Einheit zwischen die Tropfkörpereinbauten eines Kreuzströmers oder auch eines Gegenströmers eingeschoben werden.

Die Gittermattenpakete bzw. -stapel können in vorteilhafter Ausgestaltung der Erfindung zusätzlich stabilisiert werden, indem längs der Stapelhöhe Kopplungselemente (bspw. Zugstangen) verlaufen, die sich durch die einzelnen Gittermatten erstrecken und die Gittermatten des Stapels zusammenhalten. Darüber hinaus können jeweils benachbarte Gittermatten des Stapels auch untereinander mechanisch verbunden sein, was bspw. durch Loch/Zapfen-Verbindungen, Verschweißungen oder Verklebungen erfolgen kann.

Wie bereits oben angeklungen, können die erfindungsgemäßen Einbauelemente bzw. Stapel aus erfindungsgemäßen Einbauelementen im Nachhinein in eine Vorrichtung zur Behandlung, insbesondere Befeuchtung, Reinigung und/oder Kühlung eines Gases wie z.B. Luft, mittels einer Flüssigkeit wie z.B. Wasser, eingebracht werden. Dies bietet sich vorzugsweise bei einer nach dem Kreuzstromprinzip betriebenen Gasbehandlungsvorrichtung, insbesondere in Form eines Wärmetauschers als z.B. Rieselkühler für einen Kühlturm an, wobei die Gasbehandlungsvorrichtung mit unter horizontaler Ausrichtung an Vertikalstrebenelementen gehaltenen Gitterplatten-Tropfkörpern versehen ist, die in mehreren Ebenen und mit Abstand übereinander angeordnet sind. Hierbei lassen sich nun die Gittermatten bzw. Stapel aus Gittermatten zwischen den einzelnen Tropfkörper-Ebenen einbringen, und zwar durch sequentielles Einschieben einzelner Gittermatten oder Gittermattenstapel über die Gitterplatten-Tropfkörper, d.h. durch
- Auflegen einer Gittermatte mit deren Unterseite auf einen freiliegenden, zugänglichen Rand eines Gitterplatten-Tropfkörpers und durch sequentielles Einschieben einzelner Gittermatten über Gitterplatten-Tropfkörper der besagten Gitterplattenebene oder
- Auflegen eines Gittermattenstapels mit der Unterseite der untersten Gittermatten des Stapels auf einen freiliegenden, zugänglichen Rand eines Gitterplatten-Tropfkörpers einer Gitterplattenebene und durch spezielles Einschieben eines Gittermattenstapels über Gitterplatten-Tropfkörper der besagten Gitterplattenebene.
Bei dieser Vorgehensweise kann mit Vorteil zusätzlich vorgesehen sein, dass
- die jeweils nächste einzubringende Gittermatte mit der jeweils zuvor eingebrachten Gittermatte zunächst durch Kopplungselemente mechanisch gekoppelt wird und dass anschließend die dergestalt gekoppelten Gittermatten weiter eingeschoben werden oder dass
- der jeweils nächste einzubringende Gittermattenstapel mit dem jeweils zuvor eingebrachten Gittermattenstapel zunächst durch Kopplungselemente mechanisch gekoppelt werden und dass anschließend die dergestalt gekoppelten Gittermattenstapel weiter eingeschoben werden.

Die Erfindung wird nachfolgend anhand eines Ausführungsbeispiels und unter Bezugnahme auf die Zeichnung näher erläutert. Im Einzelnen zeigen dabei:
- Fig. 1: eine Gesamtseitenansicht eines Kühlturms mit einem strömungstechnisch vorgelagerten Wärmetauscher zur Abkühlung von in diesem Ausführungsbeispiel Wasserdampf,
- Fig. 2: eine Ansicht auf den Einlass des Wärmetauschers gemäß dem Pfeil II der Fig. 1,
- Fig. 3 bis 5: verschiedene Ansichten einer Gittermatte, aus denen Gittermattenstapel erstellt werden, die sich in dem Wärmetauscher befinden,
- Fig. 6 bis 8: verschiedene Darstellungen von übereinander angeordneten Gittermatten in Form von Stapeln und
- Fig. 9 bis 13: die einzelnen Verfahrensschritte beim Einschieben der Gittermattenstapel in den Wärmetauscher sowie zur schrittweisen und sequentiellen Kopplung jeweils benachbarter in den Wärmetauscher einzuschiebender Gittermattenstapel.

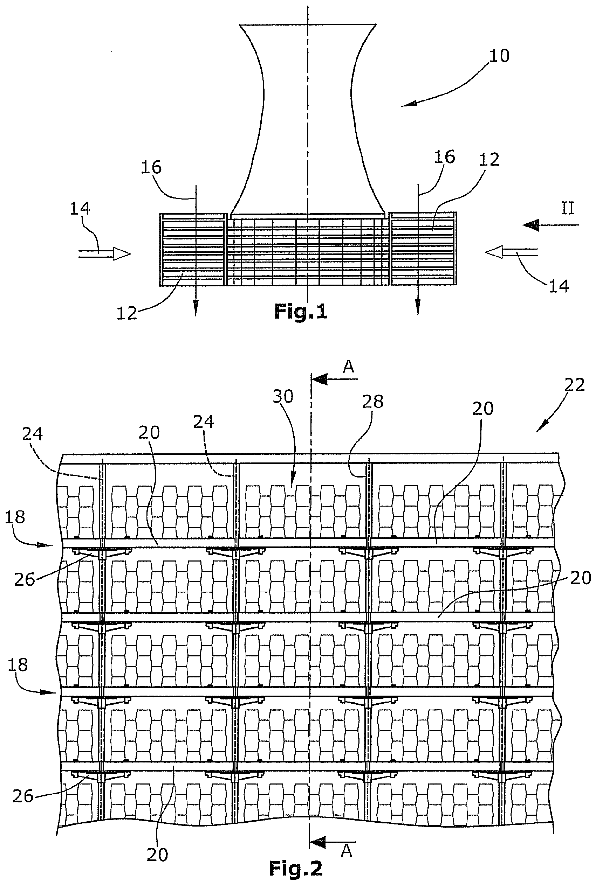

Anhand der Fign. 1 und 2 wird nachfolgend auf einen Wärmetauscher mit Tropfkörpereinbauten zu Kühlzwecken bei einem Kühlturm als ein Anwendungsbeispiel für den Einsatz erfindungsgemäßer Gittermatten näher eingegangen.

Die Tropfkörpereinbauten sind in diesem Ausführungsbeispiel Bestandteil eines Wasserdampfkühlers, wie er bspw. in Kraftwerken dem Kühlturm 10 vorgeschaltet ist. Um den Einlass des Kühlturms 10 herum sind Wärmetauscher 12 positioniert, in denen nach dem Kreuzstromprinzip einströmender Wasserdampf (siehe den Strömungspfeil 14) durch herabtropfendes Wasser (siehe den Richtungspfeil 16) gekühlt wird.

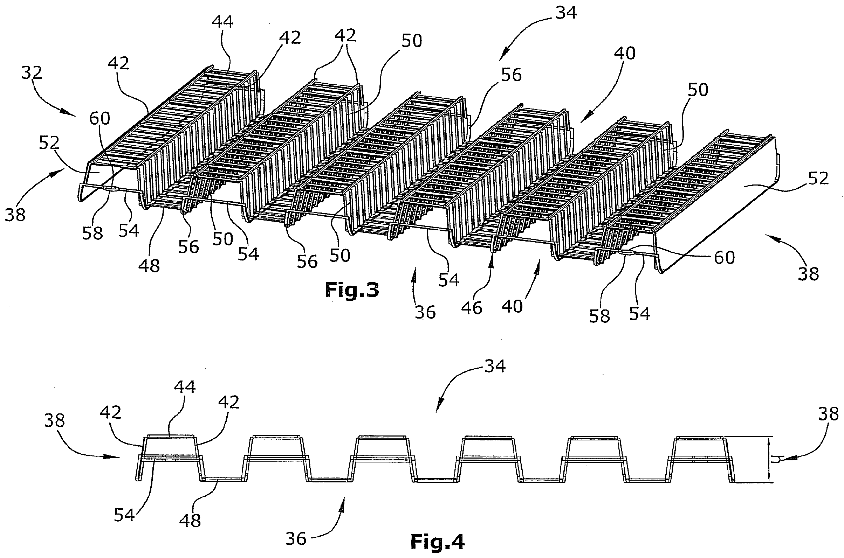

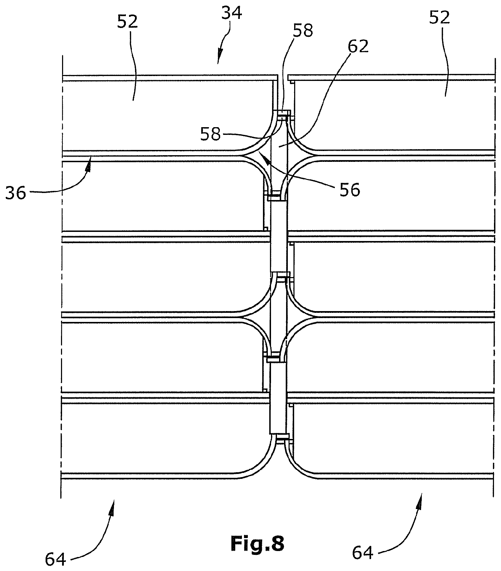

In dem Wärmetauscher 12 finden sich mehrere Ebenen 18 von nebeneinander angeordneten (Gitter-) Tropfkörpern 20 (siehe Fig. 2), die in diesem Ausführungsbeispiel als Gitterplatten ausgebildet sind. Die Tropfkörper 20 sind an ihren Ecken von Auflagervorrichtungen 22 gehalten. Die Auflagervorrichtungen 22 weisen eine Vielzahl von Vertikalstreben 24 auf, an denen mehrere übereinander angeordnete Auflagerelemente 26 positioniert sind, welche durch Abstandsröhrchen 28 auf Abstand gehalten sind, wobei die Abstandsröhrchen 28 ebenfalls von den Vertikalstreben 24 durchdrungen sind. Zwischen den einzelnen (Gitter-) Tropfkörperebenen 18 befinden sich, auf den Tropfkörpern 20 ruhend, eine Vielzahl von Gittermattenstapel bzw. -pakete 30, auf die bzw. auf deren einzelne Gittermatten 32 nachfolgend anhand der Fign. 3 bis 8 näher eingegangen wird.

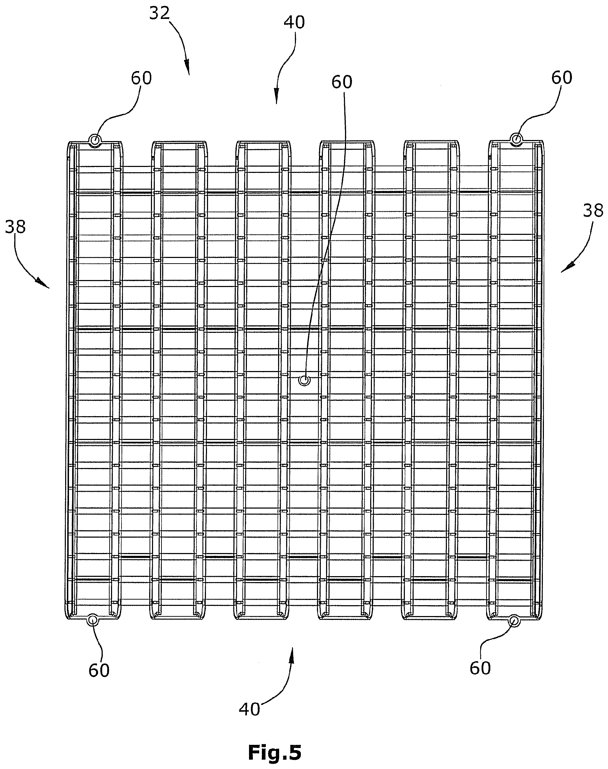

Der Aufbau einer einzelnen Gittermatte 32 ist in den Fign. 3 bis 5 verdeutlicht, die eine perspektivische Vorderansicht, eine Vorderansicht in Erstreckungsebene der Gittermatte sowie eine Draufsicht auf die Gittermatte zeigen. Wie insbesondere gut anhand der Fign. 3 und 4 zu erkennen ist, weist die Gittermatte 32 eine Oberseite 34 sowie eine Unterseite 36 auf. Die Gittermatte 32 ist durch zwei Längsränder 38 sowie durch zwei Querränder 40 begrenzt und ist, in der Draufsicht gemäß Fig. 5 betrachtet, mit einer im Wesentlichen rechteckigen bzw. quadratischen Gesamtstruktur versehen. In der Ebene der Oberseite 34 verlaufen eine Vielzahl von oberseitigen Gitterstreben 42, die parallel zu den Längsrändern 38 verlaufen, wobei jeweils benachbarte oberseitige Gitterstreben 42 durch oberseitige Verbindungsstreben 44 untereinander verbunden sind. In entsprechender Weise erstrecken sich in der Ebene der Unterseite 36 unterseitige Gitterstreben 46, die parallel zu den oberseitigen Gitterstreben 42 verlaufen und die paarweise verbunden sind, und zwar durch unterseitige Verbindungsstreben 48. Ferner weist die Gittermatte 32 Zwischenverbindungsstreben 50 auf, die jeweils benachbarte oberseitige und unterseitige Gitterstreben 42, 46 miteinander verbinden.

Wie zu erkennen ist, verlaufen die oberseitigen Verbindungsstreben 44, die unterseitigen Verbindungsstreben 48 und die Zwischenverbindungsstreben 50 parallel bzw. im Wesentlichen in einer Linie zueinander; sie könnten aber auch seitlich versetzt zueinander verlaufen.

An den Längsrändern 38 befinden sich in diesem Ausführungsbeispiel geschlossene Wandelemente 52.

An den Querrändern 40 weist die Gittermatte 32 Querrandstrebenabschnitte 54 auf, die in etwa der Hälfte der Höhe h der Gittermatte 32 verlaufen (siehe hierzu insbesondere Fig. 4). Diese Querrandstrebenabschnitte verbinden jeweils zwei kufenartige Verlängerungen zweier benachbarter unterer Gitterstreben 46, wie dies insbesondere anhand von Fig. 3 zu erkennen ist. Die beiden kufenartigen Verlängerungen bilden Auflaufabschnitte 56, die es ermöglichen, dass die Gittermatte 32 mit ihrer Unterseite 36 auf einem Untergrund liegend über diesen verschoben werden kann. Dies ist u.a. dann erforderlich, wenn die Gittermatten 32 bzw. Stapel aus Gittermatten 32 auf den Gitterplatten der Tropfkörper 20 verschoben werden, worauf im Folgenden noch näher eingegangen werden wird. Dem Zweck der einfacheren Verschiebbarkeit der Gittermatte 32 über einen Untergrund dient auch der Umstand, dass die unterseitigen Verbindungsstreben 48 auf den unteren Gitterstreben 46 angeordnet sind, womit die unteren Gitterstreben 46 zusammen mit den beidseitigen Auflaufabschnitten 56 Gleitkufen bilden.

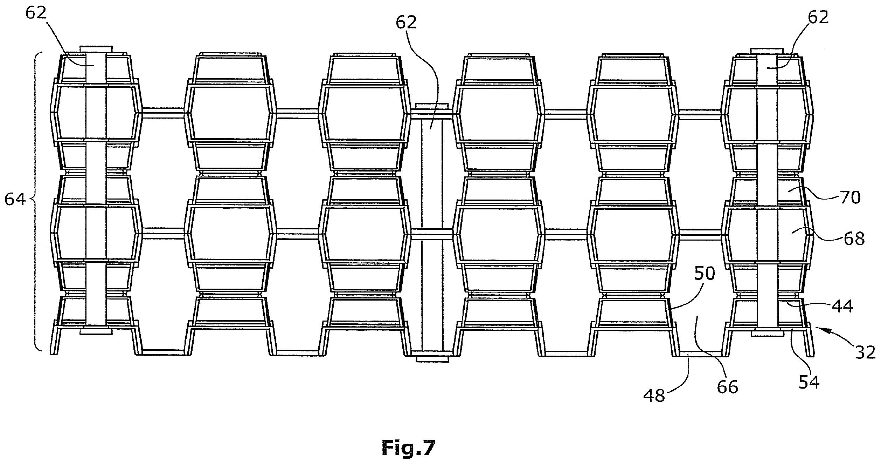

Wie insbesondere anhand von Fig. 3 zu erkennen ist, weisen einige der Querrandstrebenabschnitte 54 Ringe 58 auf, die Durchgangsöffnungen 60 begrenzen. Diese Durchgangsöffnungen 60 der Gittermatten 32 fluchten miteinander, wenn mehrere Gittermatten 32, jeweils alternierend verdreht zueinander, also wechselweise mit ihren Unterseiten und mit ihren Oberseiten aneinanderliegend, übereinander gestapelt sind. Derartige Durchgangsöffnungen befinden sich auch über die Gittermatte verteilt (siehe Fig. 5). Die Durchgangsöffnungen 60 nehmen Kopplungselemente oder Zugankerelemente 62 auf (siehe Fig. 7), die den Stapel aus Gittermatten 32 zusammenhalten bzw. benachbarte Stapel von Gittermatten 32 miteinander verbinden.

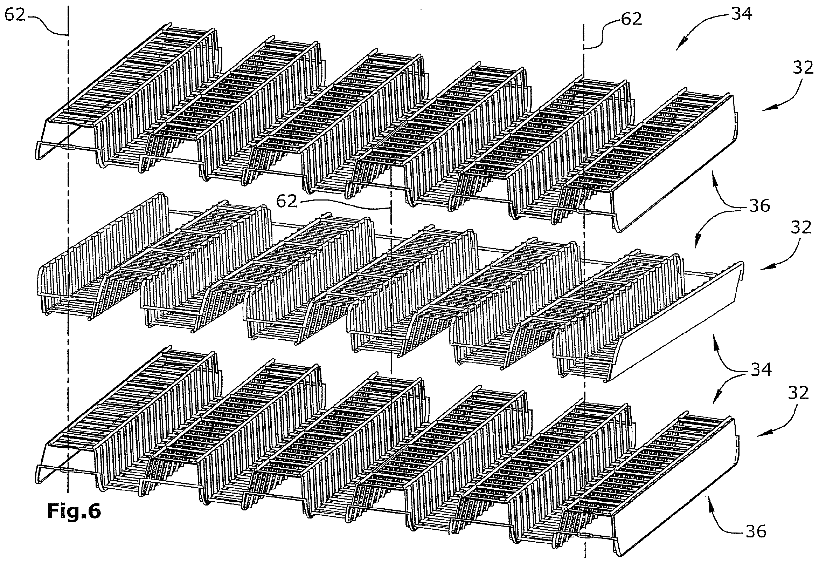

Wie anhand der Fign. 6 bis 8 verdeutlicht ist, werden nun mehrere Gittermatten 32 übereinander gestapelt, und zwar jeweils wechselweise mit ihren Oberseiten und Unterseiten aneinander liegend, wobei die unterste Gittermatte 32 des Stapels 64 mit ihrer Unterseite 36 auf einem Untergrund verschoben werden kann, und zwar wegen ihrer "Gleitkufen". Anhand von Fig. 7 ist zu erkennen, wie sich durch die Trapez- bzw. Rechteckwellenform der einzelnen übereinander gestapelten Gittermatten 32 einzelne Durchströmungskanäle 66, 68 und 70 ergeben, die durch die einzelnen ober- und unterseitigen Verbindungsstreben, die Zwischenverbindungsstreben 50 sowie die Querrandstrebenabschnitte ergeben. Diese Kanäle sind untereinander verbunden, da sie ja lediglich durch die einzelnen zuvor genannten Streben seitlich und am Boden begrenzt sind. Durch diese Kanäle strömt der abzukühlende Wasserdampf, während von oben auf den Stapel das Kühlwasser tropft.

Benachbarte Gittermattenstapel 64 werden, wie oben bereits angedeutet, durch die Koppelelemente 62 verbunden, die sich durch die miteinander fluchtenden Durchgangsöffnungen 60 an den einander zugewandten Querrändern 40 erstrecken (siehe dazu auch Fig. 6, die diese Situation für drei aufeinander folgende sich mit ihren Querrändern 40 berührende Gittermatten 32 zeigt).

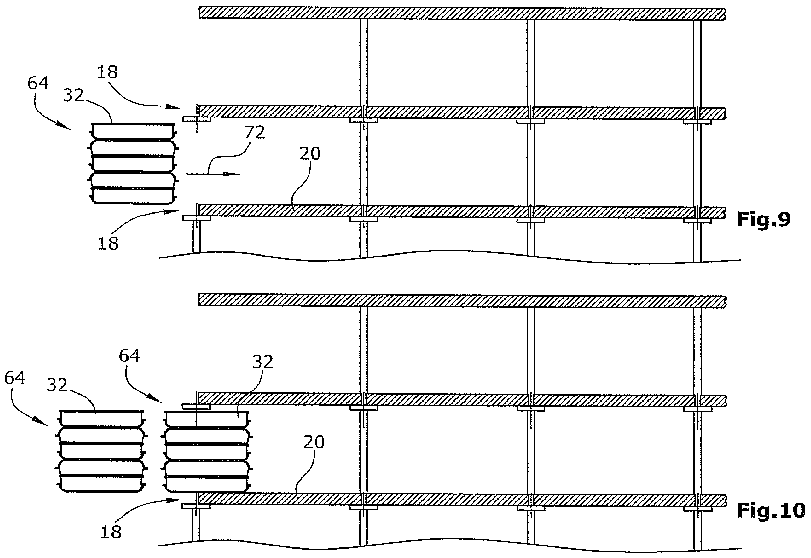

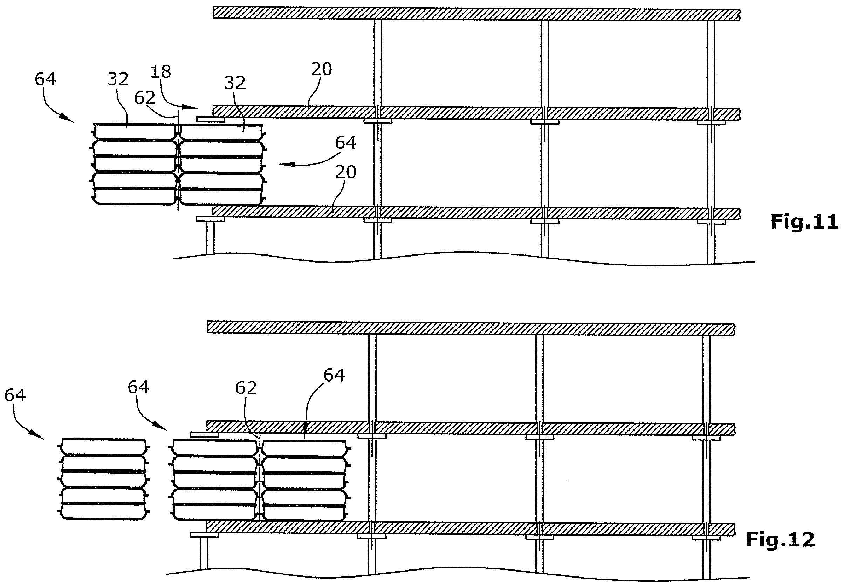

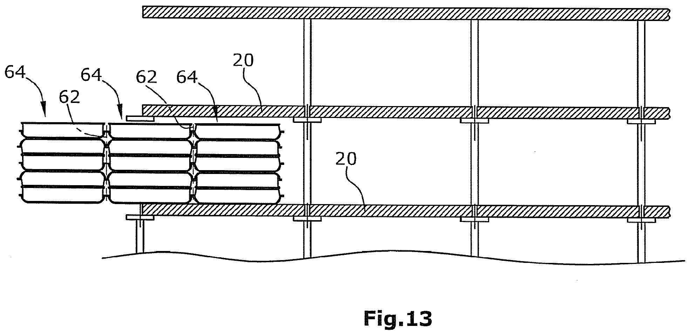

Abschließend soll noch hinsichtlich der Vorgehensweise zum Bestücken des Wärmetauschers 12 mit Stapeln 64 aus Gittermatten 32 auf die Fign. 9 bis 13 kurz eingegangen werden. Die Fign. 9 bis 13 zeigen jeweils die Schnittansicht entlang der Schnittlinie A - A der Fig. 2. Von bspw. der Wasserdampfeinströmseite aus (in den Fig. 9 bis 13 links dargestellt) werden nun die einzelnen Gittermattenstapel 64 sukzessive über die Tropfkörper 20 der einzelnen Tropfkörperebenen 18 geschoben. Zunächst wird ein erster Gittermattenstapel 64 eingeschoben (siehe Fig. 9), bis er mit seinem in Einschubrichtung (siehe Pfeil 72 in Fig. 9) hinteren Ende nach außen übersteht. Nun wird ein zweiter Gittermattenstapel 64 in Kontakt mit dem hinteren Querrand des bereits eingeschobenen Gittermattenstapels 64 gebracht (siehe Fig. 10 und 11), woraufhin dann diese beiden Stapel durch Kopplungselemente 62 mechanisch miteinander verbunden werden. Alsdann wird dieser so beschaffene "Tandem-" Gittermattenstapel weiter in Richtung des Pfeils 72 über die Tropfkörper 20 geschoben, bis dann der in Einschubrichtung hintere Gittermattenstapel 64 mit seinem hinteren Querrand noch geringfügig nach außen übersteht. In den Fign. 12 und 13 ist dann gezeigt, wie ein nächster Gittermattenstapel 64 "angedockt" und mit dem hinten überstehenden Gittermattenstapel 64 über Kopplungselemente 62 verbunden wird. Der so geschaffene Verbund wird dann weiter eingeschoben. Dieser Vorgang wird daraufhin fortgesetzt, bis eine Tropfkörperebene 18 über die gesamte Erstreckung des Wärmetauschers 12 zwischen seiner Wasserdampfeintritts- und -austrittsseite gefüllt ist.

Die Erfindung wurde in dieser Beschreibung in ihrer Anwendung bei einem Kühlturm und insbesondere bei einem speziellen Kühlturm gezeigt. Es sei an dieser Stelle darauf hingewiesen, dass die Erfindung auf diesen Anwendungsfall nicht beschränkt ist, sondern, wie eingangs der Beschreibung erwähnt, auf ein Einbauelement für eine Vorrichtung zur Behandlung, insbesondere Befeuchtung, Reinigung und/oder Kühlung eines Nutzfluids, insbesondere eines Gases wie z. B. Luft, mittels eines Arbeitsfluids, insbesondere einer Flüssigkeit wie z. B. Wasser gerichtet ist. Insbesondere ist es möglich, die erfindungsgemäßen Einbauelemente beispielsweise einzeln oder übereinandergestapelt hängend anzuordnen. Diese Einbauelemente bzw. Einbauelementstapel können schließlich auch auf andere Weise mechanisch gestützt in einer Fluidbehandlungskammer odgl. Umfeld angeordnet werden.

## Patentansprüche

1. Einbauelement für eine Vorrichtung zur Behandlung, insbesondere Befeuchtung, Reinigung und/oder Kühlung eines Nutzfluids, insbesondere eines Gases wie z.B. Luft, mittels eines Arbeitsfluids, insbesondere einer Flüssigkeit wie z.B. Wasser, und vorzugsweise für eine nach dem Kreuzstromprinzip betriebene Gasbehandlungsvorrichtung, insbesondere in Form eines Wärmetauschers als z.B. Rieselkühler für einen Kühlturm, mit
- mindestens einer Gittermatte (32), die versehen ist mit
- einer Oberseite (34) und einer Unterseite (36) sowie zwei zueinander parallelen Längsrändern (38) und zwei dazu querverlaufenden Querrändern (40),
- einer ersten Gruppe von oberen Gitterstreben (42), die in Höhe der Oberseite (34) sowie parallel zu den Längsrändern (38) verlaufen und sich von dem einen Querrand (40) hin zum anderen Querrand (40) erstrecken,
- einer zweiten Gruppe von unteren Gitterstreben (46), die in Höhe der Unterseite (36) sowie parallel zu den Längsrändern (38) verlaufen und sich zwischen den Querrändern (40) erstrecken,
- in Höhe der Oberseite (34) verlaufenden, oberseitigen Verbindungsstreben (44) zwischen jeweils zwei benachbarten oberen Gitterstreben (42),
- in Höhe der Unterseite (36) verlaufenden, unterseitigen Verbindungsstreben (48) zwischen jeweils zwei benachbarten unteren Gitterstreben (46),
- wobei die oberseitigen und die unterseitigen Verbindungsstreben (48), in Erstreckung der Gittermatte (32) zwischen ihren Längsrändern (38) betrachtet, wechselweise aufeinanderfolgen, und
- von der Ober- bis zur Unterseite verlaufenden Zwischenverbindungsstreben (50) zwischen jeweils einer oberen Gitterstrebe (42) und der zu dieser nächstbenachbarten unteren Gitterstrebe (46),
- wobei die unteren Gitterstreben (46) an ihren an mindestens einem der beiden Querrändern (40) angeordneten Enden schräg oder gekrümmt zur Oberseite (34) der Gittermatte (32) hin weisende Auflaufabschnitte (56) zur Erleichterung eines in Richtung der Gitterstrebenerstreckung erfolgenden Verschiebens der Gittermatte (32) relativ zu einem Untergrund und über diesen aufweisen.

2. Einbauelement nach Anspruch 1, **dadurch gekennzeichnet, dass** die jeweils längs eines Längsrandes verlaufenden oberen und unteren Gitterstreben (42, 46) an den gegenüberliegenden Seitenrändern von hochstehenden streifenförmigen Wandelementen (52) angeordnet sind, die entweder geschlossen oder perforiert o.dgl. mit Durchbrechungen versehen sind.

3. Einbauelement nach Anspruch 1 oder 2, **dadurch gekennzeichnet, dass** die oberseitigen und/oder die unterseitigen Verbindungsstreben (44, 48) breiter sind als die Zwischenverbindungsstreben (50) und ggf. als die oberen und die unteren Gitterstreben (42, 46).

4. Einbauelement nach einem der Ansprüche 1 bis 3, **dadurch gekennzeichnet, dass** die Längsränder (38) durchgehend und die Querränder (40) unterbrochen sind.

5. Einbauelement nach einem der Ansprüche 1 bis 4, **dadurch gekennzeichnet, dass** die oberseitigen Verbindungsstreben (44) an zur Unterseite (36) der Gittermatte (32) weisende Unterseiten der oberen Gitterstreben (42) mit diesen verbunden sind und/oder dass die unterseitigen Verbindungsstreben (48) an zur Oberseite (34) der Gittermatte (32) weisenden Oberseiten (34) der unteren Gitterstreben (46) mit diesen verbunden sind.

6. Einbauelement nach einem der Ansprüche 1 bis 5, **dadurch gekennzeichnet, dass** die Auflaufabschnitte (56) zweier benachbarter unterer Gitterstreben (46) durch einen Querrandstrebenabschnitt (54) untereinander verbunden sind.

7. Einbauelement nach Anspruch 6, **dadurch gekennzeichnet, dass** der Querrandstrebenabschnitt (54) in einer Höhe verläuft, die sich innerhalb des mittleren Drittels des Abstandes zwischen der Ober- und der Unterseite der Gittermatte (32) befindet.

8. Einbauelement nach einem der Ansprüche 1 bis 7, **dadurch gekennzeichnet, dass** jeder Querrand der Gittermatte (32) mindestens eine Durchgangsöffnung (60) mit einer zur Ober- und Unterseite der Gittermatte (32) parallelen Öffnungsebene aufweist, wobei die Durchgangsöffnung in Flucht mit einer an einem Querrand einer oberhalb oder unterhalb der besagten Gittermatte (32) benachbarten Gittermatte (32) angeordneten Durchgangsöffnung positionierbar ist, und dass die beiden Gittermatten (32) mittels eines Kopplungselements (62) zum Einstecken in die miteinander fluchtenden Durchgangsöffnungen verbindbar sind, wobei das Kopplungselement insbesondere als Hohl- oder Vollmaterialstab ausgebildet ist.

9. Einbauelement nach Anspruch 8, **dadurch gekennzeichnet, dass** die mindestens eine Durchgangsöffnung an oder in einem der Querrandstrebenabschnitte ausgebildet ist.

10. Einbauelement nach einem der Ansprüche 1 bis 9, **dadurch gekennzeichnet, dass** mehrere Gittermatten (32) zu einem Stapel übereinander gestapelt sind, wobei benachbarte Gittermatten (32) des Stapels wechselweise mit ihren Oberseiten (34) und ihren Unterseiten (36) aufeinanderliegen.

11. Einbauelement nach den Ansprüchen 8 und 10, **dadurch gekennzeichnet, dass** die mindestens einen Durchgangsöffnungen pro Querrand (40) der übereinander gestapelten Gittermatten (32) untereinander sowie mit den Durchgangsöffnungen an den Querrändern der Gittermatten (32) eines benachbarten Gittermattenstapels (64) fluchten und dass die fluchtenden Durchgangsöffnungen mittels des Kopplungselements, welches insbesondere als Hohl- oder Vollmaterialstab ausgebildet und zur Erstreckung durch die fluchtenden Durchgangsöffnungen vorgesehen ist, verbindbar sind.

12. Verwendung des Einbauelements nach einem der vorhergehenden Ansprüche oder von Stapeln aus jeweils übereinanderliegenden Gittermatten (32) des Einbauelements nach einem der vorhergehenden Ansprüche bei einer Vorrichtung zur Behandlung, insbesondere Befeuchtung, Reinigung und/oder Kühlung eines Gases wie z.B. Luft, mittels einer Flüssigkeit wie z.B. Wasser, vorzugsweise bei einer nach dem Kreuzstromprinzip betriebenen Gasbehandlungsvorrichtung, insbesondere in Form eines Wärmetauschers als z.B. Rieselkühler für einen Kühlturm, wobei die Gasbehandlungsvorrichtung mit unter horizontaler Ausrichtung an Vertikalstrebenelementen gehaltenen Gitterplatten-Tropfkörpern (20) versehen ist, die in
mehreren Ebenen und mit Abstand übereinander angeordnet sind, zur Einbringung zwischen den einzelnen Tropfkörper-Ebenen (18) durch
- Auflegen einer Gittermatte (32) mit deren Unterseite (36) auf einen freiliegenden, zugänglichen Rand eines Gitterplatten-Tropfkörpers und durch sequentielles Einschieben einzelner Gittermatten (32) über Git-terplatten-Tropfkörper der besagten Gitterplattenebene oder
- Auflegen eines Gittermattenstapels (64) mit der Unterseite (36) der untersten Gittermatten (32) des Stapels auf einen freiliegenden, zugänglichen Rand eines Gitterplatten-Tropfkörpers einer Gitterplattenebene und durch spezielles Einschieben eines Gittermattenstapels (64) über Gitterplatten-Tropfkörper der besagten Gitterplattenebene.

13. Verwendung nach Anspruch 12, **dadurch gekennzeichnet, dass**
- die jeweils nächste einzubringende Gittermatte (32) mit der jeweils zuvor eingebrachten Gittermatte (32) zunächst durch Kopplungselemente mechanisch gekoppelt wird und dass anschließend die dergestalt gekoppelten Gittermatten (32) weiter eingeschoben werden oder dass
- der jeweils nächste einzubringende Gittermattenstapel (64) mit dem jeweils zuvor eingebrachten Gittermattenstapel (64) zunächst durch Kopplungselemente mechanisch gekoppelt werden und dass anschließend die dergestalt gekoppelten Gittermattenstapel (64) weiter eingeschoben werden.

## Claims

1. Installation element for a device for the treatment, in particular the humidification, purification and/or cooling, of a useful fluid, in particular a gas e.g. air, by means of a working fluid, in particular e.g. water, and preferably for a gas treatment device operated according to the cross-flow principle, in particular in the form of a heat exchanger as, e.g., a shower cooler for cooling tower, comprising
- at least one grid mat (32) provided with
- an upper side (34) and a lower side (36), as well as two mutually parallel longitudinal edges (38) and two transversal edges (40) extending transversally thereto,
- a first set of upper grid bars (42) extending at the level of the upper side (34), as well as parallel to the longitudinal edges (38) and extending from one transversal edge (40) to the other transversal edge (40),
- a second set of lower grid bars (46) extending at the level of the lower side (36), as well as parallel to the longitudinal edges (38) and extending between the transversal edges (40),
- upper connecting bars (44) between two respective adjacent upper grid bars (42), said connecting bars extending at the level of the upper side (34),
- lower connecting bars (48) between two respective adjacent lower grid bars (46), said connecting bars extending at the level of the lower side (36),
- wherein the upper and the lower connecting bars (44, 48), seen in the direction of the extension of the grid mat (32) between its longitudinal edges (38), are arranged in alternate succession, and
- intermediate connecting bars (50) extending from the upper to the lower side between a respective upper grid bar (42) and the lower grid bar (46) closest thereto,
- wherein, at their ends arranged at at least one of the two transversal edges (40), the lower grid bars (46) are provided with skid sections (56) directed to the upper side (34) of the grid mat (32) in an inclined or curved shape, said sections serving to facilitate a shifting of the grid mat (32) in the direction of the grid bar extension relative to a substrate or over the same.

2. Installation element of claim 1, **characterized in that** the upper and lower grid bars (42, 46) respectively extending along a longitudinal edge are arranged at the opposite side edges of upright strip-shaped wall elements (52) that are either closed or perforated or the like provided with openings.

3. Installation element of claim 1 or 2, **characterized in that** the upper and/or the lower connecting bars (44, 48) are wider than the intermediate connecting bars (50) and are possibly wider than the upper and the lower grid bars (42, 46).

4. Installation element of one of claims 1 to 3, **characterized in that** the longitudinal edges (38) are continuous and the transversal edges (40) are discontinuous.

5. Installation element of one of claims 1 to 4, **characterized in that** the upper connecting bars (44) are connected with the upper grid bars (42) at lower sides thereof directed to the lower side (36) of the grid mat (32) and/or **in that** the lower side connecting bars (48) are connected with the lower grid bars (46) at upper sides (34) thereof directed to the upper side (34) of the grid mat (32).

6. Installation element of one of claims 1 to 5, **characterized in that** the skid sections (56) of two adjacent lower grid bars (46) are interconnected through a transversal edge bar section (54).

7. Installation element of claim 6, **characterized in that** the transversal edge bar section (54) extends at a level that is inside the intermediate third of the distance between the upper and the lower side of the grid mat (32).

8. Installation element of one of claims 1 to 7, **characterized in that** each transversal edge of the grid mat (32) has at least one passage opening (60) with an opening plane parallel to the upper and the lower side of the grid mat (32), wherein the passage opening is adapted to be positioned in alignment with a passage opening provided at a transversal edge of an adjacent grid mat (32) above or below said grid mat (32), and **in that** the two grid mats (32) are adapted to be connected with each other by means of a coupling element (62) for insertion into the aligned passage openings, wherein the coupling element is designed in particular as a hollow or solid material.

9. Installation element of claim 8, **characterized in that** the at least one passage opening is formed at or in one of the transversal edge sections.

10. Installation element of one of claims 1 to 9, **characterized in that** a plurality of grid mats (32) are stacked one upon the other to form a stack, wherein adjacent grid mats (32) of the stack alternately rest on each other with the upper side (34) and the lower side (36), respectively.

11. Installation element of claims 8 and 10, **characterized in that** the at least one passage opening per transversal edge (40) of the stacked grid mats (32) are aligned among each other as well as with the passage openings at the transversal openings of the grid mats (32) of an adjacent grid mat stack (64), and **in that** the aligned passage openings are adapted to be connected by means of said coupling element which is designed in particular as a hollow or solid material and is provided for extension through the aligned passage openings.

12. Use of the installation element of one of the preceding claims or of stacks of respective superposed grid mats (32) of the installation element of one of the preceding claims in a device for the treatment, in particular the humidification, purification and/or cooling, of a gas, e.g. air, by means of a liquid, e.g. water, preferably in a gas treatment device operated according to the cross-flow principle, in particular in the form of a heat exchanger as, e.g., a shower cooler for cooling tower, wherein the gas treatment device is provided with grid plate trickling filters (20) held in horizontal orientation on vertical bar elements, said filters being arranged one above the other in a plurality of planes and at a distance, for insertion between the individual trickling filter planes (18) by
- placing a grid mat (32) with its lower side (36) on an exposed accessible edge of a grid plate trickling filter and by sequential insertion of individual grid mats (32) over grid plate trickling filters of said grid plate plane, or
- placing a grid mat stack (64) with the lower side (36) of the lowermost grid mats (32) of the stack on an exposed accessible edge of a grid plate trickling filter of a grid plate plane and by special insertion of a grid mat stack (64) over grid plate trickling filters of said grid plate plane.

13. Use of claim 12, **characterized in that**
- the respective next grid mat (32) to be installed is first coupled mechanically to the respective previously installed grid mat (32) by coupling elements, and **in that** the grid mats (32) thus coupled are then inserted farther, or **in that**
- the respective next grid mat stack (64) to be installed is first coupled mechanically to the respective previously installed grid mat stack (64) by coupling elements, and **in that** the grid mat stacks (64) thus coupled are then inserted farther.

## Revendications

1. Elément de montage pour un dispositif destiné au traitement, en particulier à l'humidification, au nettoyage et/ou au refroidissement d'un fluide utilitaire, en particulier d'un gaz comme par exemple de l'air, au moyen d'un fluide de travail, en particulier d'un liquide comme par exemple de l'eau, et de préférence pour un dispositif de traitement du gaz fonctionnant selon le principe d'écoulement croisé, en particulier sous forme d'un échangeur de chaleur tel que par exemple un refroidisseur à ruissellement pour une tour de refroidissement, avec :
- au moins une natte en treillis (32) qui est munie
• d'un côté supérieur (34) et d'un côté inférieur (36) ainsi que de deux bords longitudinaux (38) parallèles et de deux bords transversaux(40) par rapport aux bords longitudinaux,
• d'un premier groupe d'entretoises de treillis (42) supérieures qui sont à la hauteur du côté supérieur (34) ainsi que parallèles aux bords longitudinaux (38) et qui s'étendent d'un bord transversal (40) à l'autre bord transversal (40),
• d'un deuxième groupe d'entretoises de treillis (46) inférieures qui sont à la hauteur du côté inférieur (36) ainsi que parallèles aux bords longitudinaux (38) et s'étendent entre les bords transversaux (40),
• d'entretoises de raccordement (44) côté supérieur à la hauteur du côté supérieur (34) entre respectivement deux entretoises de treillis (42) supérieures voisines,
• d'entretoises de raccordement (48) côté inférieur à la hauteur du côté inférieur (36) entre respectivement deux entretoises de treillis (46) inférieures voisines,
• les entretoises de raccordement (48) côté supérieur et côté inférieur, vues dans l'étendue de la natte en treillis (32) entre ses bords longitudinaux (38), se suivant de façon alternée, et
• d'entretoises de raccordement intermédiaires (50) s'étendant du côté supérieur jusqu'au côté inférieur entre respectivement une entretoise de treillis (42) supérieure et l'entretoise de treillis (46) inférieure la plus voisine de celle-ci,
• les entretoises de treillis (46) inférieures présentant, sur leurs extrémités disposées sur au moins un des deux bords transversaux (40), des segments relevés (56) dirigés de façon oblique ou courbe vers le côté supérieur (34) de la natte en treillis (32) afin de faciliter un déplacement de la natte en treillis (32) intervenant dans la direction de l'étendue des entretoises de treillis par rapport à un substrat et sur ce substrat.

2. Elément de montage selon la revendication 1, **caractérisé en ce que** les entretoises de treillis (42, 46) supérieures et inférieures placées respectivement le long d'un bord longitudinal sont disposées sur les bords latéraux opposés d'éléments de paroi (52) en forme de bandes qui se redressent et qui sont soit obturés, soit perforés ou réalisés de façon similaire avec des traversées.

3. Elément de montage selon la revendication 1 ou 2, **caractérisé en ce que** les entretoises de raccordement (48) côté supérieur et/ou côté inférieur sont plus larges que les entretoises de raccordement intermédiaires (50) et éventuellement que les entretoises de treillis (42, 46) supérieures et inférieures.

4. Elément de montage selon l'une des revendications 1 à 3, **caractérisé en ce que** les bords longitudinaux (38) sont continus et les bords transversaux (40) sont discontinus.

5. Elément de montage selon l'une des revendications 1 à 4, -**caractérisé en ce que** les entretoises de raccordement(44) côté supérieur, sur les côtés inférieurs des entretoises de treillis (42) supérieures dirigés vers le côté inférieur (36) de la natte en treillis (32), sont raccordées à ces entretoises de treillis (42) supérieures et/ou **en ce que** les entretoises de raccordement (48) côté inférieur, sur les côtés supérieurs (34) des entretoises de treillis (46) inférieures dirigés vers le côté supérieur (34) de la natte en treillis (32), sont raccordées à ces entretoises de treillis (46) inférieures.

6. Elément de montage selon l'une des revendications 1 à 5, **caractérisé en ce que** les segments relevés (56) de deux entretoises de treillis (46) inférieures voisines sont raccordés entre eux par un segment d'entretoise de bord transversal (54).

7. Elément de montage selon la revendication 6, **caractérisé en ce que** le segment d'entretoise de bord transversal s'étend à une hauteur qui se trouve à l'intérieur du tiers central de la distance entre le côté supérieur et le côté inférieur de la natte en treillis (32).

8. Elément de montage selon l'une des revendications 1 à 7, **caractérisé en ce que** chaque bord transversal de la natte en treillis (32) présente au moins une ouverture de passage (60) avec un plan d'ouverture parallèle au côté supérieur et au côté inférieur de la natte en treillis (32), l'ouverture de passage (60) pouvant être positionnée en alignement avec une ouverture de passage disposée sur un bord transversal d'une natte en treillis (32) voisine au-dessus ou au-dessous de ladite natte en treillis (32), et **en ce que** les deux nattes en treillis (32) peuvent être raccordées au moyen d'un élément d'accouplement (62) pour en fichage dans les ouvertures de passage en alignement l'une avec l'autre, l'élément d'accouplement (62) étant réalisé en particulier en tant que barreau en matériau creux ou plein.

9. Elément de montage selon la revendication 8, **caractérisé en ce que** l'ouverture de passage au moins au nombre de un est réalisée sur ou dans l'un des segments d'entretoise de bord transversal.

10. Elément de montage selon l'une des revendications 1 à 9, **caractérisé en ce que** plusieurs nattes en treillis (32) sont empilées les unes sur les autres pour former une pile, des nattes en treillis (32) voisines de la pile étant placées de façon alternée avec leurs côtés supérieurs (34) et leurs côtés inférieurs (36) en appui les uns sur les autres.

11. Elément de montage selon les revendications 8 et 10, **caractérisé en ce que** les ouvertures de passage au moins au nombre de un par bord transversal (40) des nattes en treillis (32) empilées les unes sur les autres sont en alignement les unes avec les autres ainsi qu'avec les ouvertures de passage sur les bords transversaux des nattes en treillis (32) d'une pile de nattes en treillis (64) voisine, et **en ce que** les ouvertures de passage en alignement peuvent être raccordées au moyen de l'élément d'accouplement qui est réalisé en particulier en tant que barreau en matériau creux ou plein et qui est prévu pour s'étendre à travers les ouvertures de passage en alignement.

12. Utilisation de l'élément de montage selon l'une des revendications précédentes ou de piles de nattes en treillis (32) de l'élément de montage respectivement superposées selon l'une des revendications précédentes dans le cas d'un dispositif destiné au traitement, en particulier à l'humidification, au nettoyage et/ou au refroidissement d'un fluide utilitaire, en particulier d'un gaz comme par exemple de l'air, au moyen d'un fluide de travail, en particulier d'un liquide comme par exemple de l'eau, de préférence dans le cas d'un dispositif de traitement du gaz fonctionnant selon le principe d'écoulement croisé, en particulier sous forme d'un échangeur de chaleur tel que par exemple un refroidisseur à ruissellement pour une tour de refroidissement, le dispositif de traitement du gaz étant muni de lits percolateurs à panneaux en treillis qui sont retenus dans une orientation horizontale sur des éléments d'entretoises verticaux et qui sont disposés de façon espacée les uns au-dessus des autres dans plusieurs plans, pour une mise en place entre les différents plans de lits percolateurs
- par la pose d'une natte en treillis (32) avec son côté inférieur (36) sur un bord libre et accessible d'un lit percolateur de panneaux en treillis, et par l'insertion séquentielle de différentes nattes en treillis (32) sur des lits percolateurs de panneaux en treillis dudit plan de panneaux en treillis, ou,
- par la pose d'une pile de nattes en treillis (64) avec le côté inférieur (36) des nattes en treillis (32) les plus inférieures de la pile sur un bord libre accessible d'un lit percolateur de panneaux en treillis d'un plan de panneaux en treillis, et par l'insertion spéciale d'une pile de nattes en treillis (64) sur des lits percolateurs de panneaux en treillis dudit plan de panneaux en treillis.

13. Utilisation selon la revendication 12, **caractérisée en ce que** :
- la natte en treillis (32) suivante respective qui doit être mise en place est d'abord couplée mécaniquement, par des éléments d'accouplement, à la natte en treillis (32) précédemment mise en place respectivement, et **en ce qu'**ensuite les nattes en treillis (32) ainsi couplées sont insérées plus avant, ou
- **en ce que** la pile de nattes en treillis (64) suivante respective qui doit être mise en place est d'abord couplée mécaniquement, par des éléments d'accouplement, à la pile de nattes en treillis précédemment mise en place (64) respectivement, et **en ce qu'**ensuite les piles de nattes en treillis (64) ainsi couplées sont insérées plus avant.
